# EUROPÄISCHE PATENTSCHRIFT

(11) **EP 0 518 103 B1**
(45) Veröffentlichungstag und Bekanntmachung des Hinweises auf die Patenterteilung: **30.08.1995**
(21) Anmeldenummer: 92108714.4
(22) Anmeldetag: 23.05.1992
(51) Int. Cl.: B65H 51/14, B65G 15/14

(54) **Vorrichtung zum Ziehen eines langgestreckten Profilkörpers**
Device for pulling elongated profiles
Dispositif pour tirer un corps profilé allongé

(30) Priorität: 01.06.1991 DE 4117995
(43) Veröffentlichungstag der Anmeldung: 16.12.1992
(73) Patentinhaber: FRIEDRICH THEYSOHN GmbH, D-30853 Langenhagen (DE)
(72) Erfinder: Topf, Siegfried, A-4050 Traun (AT); Reisinger, Ludwig, McPherson, Kansas 67460 (US); Gröblacher, Hans, McPherson, Kansas 67460 (US)
(74) Vertreter: Döring, Roger, Dipl.-Ing.

(56) Entgegenhaltungen:
- DE-A- 2 354 767
- FR-A- 1 083 065
- GB-A- 1 419 476

## Beschreibung

Die Erfindung bezieht sich auf eine Vorrichtung zum Ziehen eines langgestreckten Profilkörpers in seiner Längsrichtung, bestehend aus zwei durch einen Zwischenraum zur Aufnahme des Profilkörpers voneinander getrennten endlosen Raupen, die über Umlenkräder geführt sind und von denen zur Veränderung des Abstandes der beiden Raupen voneinander mindestens eine relativ zur anderen verstellbar ist (DE-Buch "Kabel-Herstellung'' von Ehlers/Lau, 1956, Springer-Verlag, Seiten 156 und 157).

Derartige Vorrichtungen sind beispielsweise aus der Kabeltechnik bekannt. Sie werden wegen ihres speziellen Bewegungsablaufs auch als "Raupenabzug" bezeichnet. Das gilt insbesondere dann, wenn die Raupen aus einer Vielzahl von voneinander getrennten Auflagen bestehen. "Profilkörper" im Sinne der Erfindung können alle Arten von elektrischen Kabeln und Leitungen sowie von Plastifiziervorrichtungen (Extrudern) erzeugte massive Stränge und Hohlprofile sein.

Die beiden Raupen des Raupenabzugs werden von den Umlenkrädern bewegt, von denen pro Raupe mindestens eins angetrieben wird. Durch die Verstellbarkeit der beiden Raupen relativ zueinander ist es möglich, den Raupenabzug zum Ziehen von Profilkörpern unterschiedlicher Abmessungen einzusetzen. Dabei ergeben sich bei Profilkörpern mit achssymmetrischen, beispielsweise runden oder quadratischen, Querschnitten oder mit zwei im wesentlichen parallelen Anlageflächen kaum Schwierigkeiten. Solche Profilkörper können von den an ihrer Oberfläche anliegenden Raupen problemlos gezogen werden. Bei Profilkörpern mit stark unsymmetrischen Querschnitten und/oder schräg zueinander verlaufenden Anlageflächen ist der Einsatz von Raupenabzügen oft nur mit Zusatzaufwand möglich. Die Raupen können dazu mit sogenannten Sonderstollen ausgerüstet werden, die der Form der Profilkörper angepaßt sind. Die für das Ziehen der Profilkörper erforderliche Anpreßkraft der Raupen würde sonst zu einem hohen Verschleiß derselben führen. Es bestände außerdem die Gefahr, daß die Oberfläche oder die Form der Profilkörper beschädigt wird.

Der Erfindung liegt die Aufgabe zugrunde, die eingangs geschilderte Vorrichtung so weiterzubilden, daß auch Profilkörper mit unsymmetrischen Querschnitten, insbesondere Profilkörper mit schräg zueinander verlaufenden Flächen, ohne Schwierigkeiten gezogen werden können.

Diese Aufgabe wird gemäß der Erfindung dadurch gelöst, daß mindestens eine der Raupen um eine in ihrer Längsrichtung verlaufende Achse kippbar ist.

Durch die kippbare Anordnung mindestens einer der Raupen kann die Lauf- bzw. Anlagefläche derselben gegenüber der Abzugsebene schräg eingestellt werden. Der Raupenabzug kann dadurch ohne sonstige Änderungen insbesondere für Profilkörper mit zwei schräg zueinander verlaufenden Flächen eingesetzt werden. Die Gefahr einer Beschädigung der Profilkörper durch zu hohen Druck der Raupen ist ebenso vermieden wie ein dadurch bedingter erhöhter Verschleiß an den Raupen selbst. Insbesondere dann, wenn beide Raupen um ihre Längsachse kippbar sind, ist eine Anpassung der Stellung ihrer Anlageflächen an Profilkörper mit in weiten Grenzen unterschiedlichen Querschnittsformen möglich.

Vorteilhafte Ausgestaltungen der Erfindung gehen aus den Unteransprüchen hervor.

Ausführungsbeispiele des Erfindungsgegenstandes sind in den Zeichnungen dargestellt.

Es zeigen:
Fig. 1 eine Vorrichtung nach der Erfindung in schematischer Darstellung.
Fig. 2 einen Querschnitt durch die Vorrichtung, ebenfalls in schematischer Darstellung.
Fig. 3 eine der Raupen der Vorrichtung in vergrößerter Darstellung.
Fig. 4 eine Einzelheit der Vorrichtung in stark vereinfachter Darstellung.
Fig. 5 eine gegenüber Fig. 3 abgewandelte Ausführungsform.

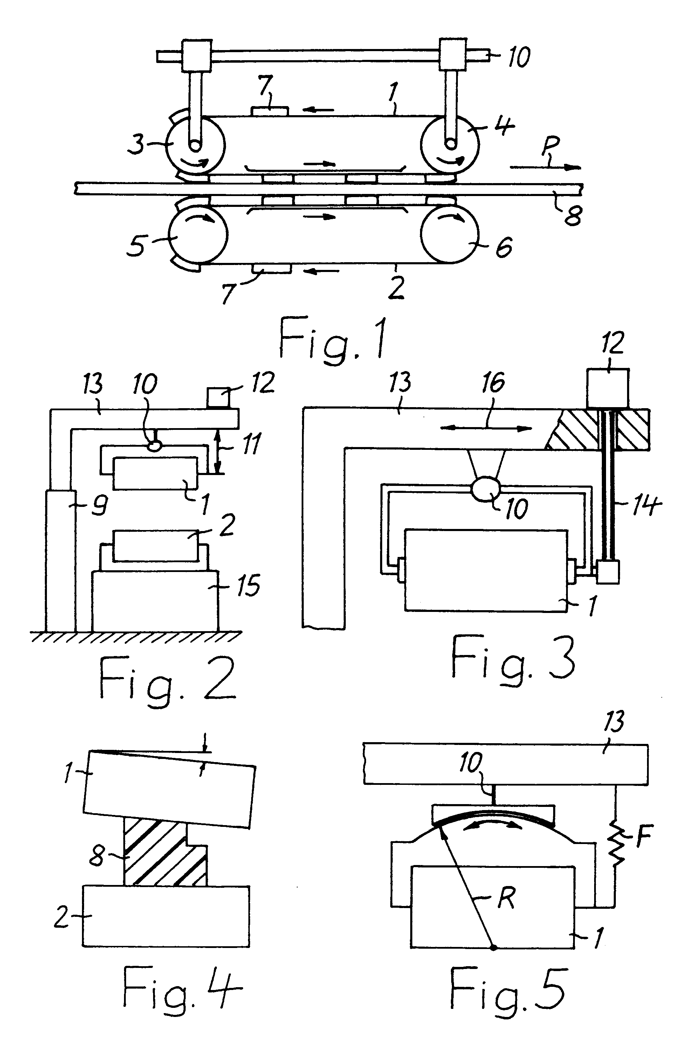

In Fig. 1 ist ein aus zwei nur schematisch angedeuteten Raupen 1 und 2 bestehender Raupenabzug dargestellt. Die Raupen 1 und 2 sind als endlose Gebilde um Umlenkräder 3 und 4 bzw. 5 und 6 herumgelegt. Jeweils eines der Umlenkräder 3 und 4 bzw. 5 und 6 jeder Raupe 1 und 2 wird angetrieben, so daß alle Umlenkräder 3 bis 6 und die beiden Raupen 1 und 2 in Richtung der in Fig. 1 eingezeichneten Pfeile bewegt werden. Die Raupen 1 und 2 bestehen beispielsweise aus Transportketten, an denen Auflagen 7 aus Gummi oder Kunststoff - nach außen weisend - dicht an dicht, aber getrennt voneinander angebracht sind. In Fig. 1 sind der Einfachheit halber nur wenige Auflagen 7 dargestellt. Die Raupen 1 und 2 können grundsätzlich auch aus endlosen Bändern bestehen. Sie sind übereinander oder nebeneinander so angebracht, daß ihre Auflagen 7 durch einen Zwischenraum voneinander getrennt sind. In diesem Zwischenraum wird ein vom Raupenabzug in Richtung des Pfeiles P zu bewegender Profilkörper 8 aufgenommen. Die Auflagen 7 der Raupen 1 und 2 liegen in Arbeitsposition fest am Profilkörper 8 an.

Die Raupen 1 und 2 können übereinander, aber auch nebeneinander angebracht sein. In den Fig. 1 und 2 sind die beiden Raupen 1 und 2 übereinander angeordnet dargestellt. Dabei ist die Raupe 1 entsprechend Fig. 2 an einem Halter 9 befestigt, der nach Art eines Galgens ausgeführt ist. Es könnte auch ein an beiden Seiten der Raupen 1 und 2 abgestütztes Gestell eingesetzt werden. Zur Einstellung der Größe des Zwischenraums zwischen den beiden Raupen 1 und 2 ist der Halter 9 in der Höhe verstellbar.

Im dargestellten Ausführungsbeispiel ist die Raupe 1 an einer Achse 10 aufgehängt, die am Halter 9 befestigt ist. Die Achse 10 ist in bevorzugter Ausführungsform in der Mitte der Raupe 1 angebracht. Sie erstreckt sich vorzugsweise über die ganze Länge der Raupe 1, so wie es in Fig. 1 angedeutet ist. An der Achse 10 ist die komplette Raupe 1 aufgehängt, also einschließlich Umlenkrädern 3 und 4 sowie Antrieb und anderer Elemente.

Die Raupe 1 ist an der Achse 10 beweglich angebracht, so daß sie um dieselbe in Richtung des Doppelpfeiles 11 kippbar ist. Die dazu erforderliche Verstellung der Raupe 1 um die Kippachse 10 kann beispielsweise mittels eines Handrades durchgeführt werden. Es ist jedoch auch möglich, dazu einen Elektromotor 12 zu verwenden, der am Querbalken 13 des Halters 9 befestigt sein kann und die Raupe 1 beispielsweise über eine aus Fig. 3 ersichtliche Spindel 14 verstellt.

Die Verstellung der Raupe 1 könnte auch durch einen Federmechanismus F, beispielsweise eine Feder oder eine Pneumatik, erreicht werden, der gemäß Fig. 5 anstelle der Spindel 14 zwischen dem Querbalken 13 und der Halterung der Raupe 1 eingesetzt werden. Ein solcher Federmechanismus F wird so eingestellt, daß die Raupe 1 ihre in Fig. 2 dargestellte Normalstellung einnimmt. Bei einer erhöhten Belastung der Raupe 1 durch einen entsprechenden Profilkörper, der beispielsweise eine schräge Anlagefläche hat, wird die Raupe 1 dann automatisch in eine den Gegebenheiten angepaßte Position gekippt bzw. geschwenkt.

Bei Profilkörpern 8 mit einem symmetrischen Querschnitt - rund oder quadratisch - und solchen mit parallelen Anlageflächen kann der Raupenabzug so eingesetzt werden, wie er in Fig. 2 dargestellt ist. Wenn jedoch ein Profilkörper 8 entsprechend der Darstellung in Fig. 4 mit schräg zueinander verlaufenden Anlageflächen gezogen werden soll, dann wird beispielsweise die Raupe 1 um ihre Achse 10 gekippt. Sie liegt dann in dieser gekippten Stellung mit ihrer Anlagefläche an der schrägen oberen Fläche des Profilkörpers 8 an. Die nicht gekippte Raupe 2 liegt mit ihrer Anlagefläche an der unteren Fläche des Profilkörpers 8 an. Ein solcher Profilkörper 8 kann mit nicht erhöhter Anpreßkraft gezogen werden, ohne daß die Gefahr einer Beschädigung desselben besteht und ohne daß mit einem erhöhten Verschleiß an den Raupen 1 und 2 gerechnet werden muß.

Der Winkel, um den die Raupe 1 maximal verstellt werden kann, ist begrenzt. Bei einer zu großen Schrägstellung wird die quer zur Bewegungsrichtung des Profilkörpers 8 wirkende Kraftkomponente zu groß. Der maximale Winkel zur Verstellung der Raupe 1 liegt etwa bei 15°.

In dem dargestellten Ausführungsbeispiel ist nur die obere Raupe 1 um ihre Achse 10 kippbar dargestellt. Genauso wie die Raupe 1 könnte aber auch die Raupe 2 auf ihrer Befestigungsunterlage 15 kippbar angeordnet sein, und zwar ebenfalls um eine mittig angeordnete Achse. Auch hier könnte zum Verstellen ein Handrad eingesetzt werden. Es wäre jedoch auch hier möglich, die Verstellung motorisch vorzunehmen.

Für komplizierter geformte Profilkörper 8, die nicht unbedingt nur plane Anlageflächen haben, ist es sinnvoll, beide Raupen 1 und 2 kippbar anzuordnen. Es ist auf diese Weise eine Anpassung der Position der Raupen 1 und 2 auch an kompliziertere Querschnitte von Profilkörpern möglich. Der maximale Verstellwinkel soll auch dann insgesamt nicht überschritten werden.

Die Raupe 1 soll, wie oben ausgeführt, zentral an der Achse 10 aufgehängt werden. Es kann dann relativ einfach eine symmetrische Verstellung erreicht werden kann. Trotzdem werden die Mittellinien der beiden Raupen 1 und 2 nicht nur relativ zueinander gekippt, sondern auch aus der zentralen Lage verschoben. Es ist daher zweckmäßig, den Aufhängepunkt der Achse 10 am Balken 13 in Abhängigkeit von der Größe des Winkels, um den die Raupe 1 gekippt wird, in Richtung des Doppelpfeils 16 zu verschieben. Das gilt analog auch für die Raupe 2.

Eine solche Verschiebung der Raupe 1 beim Kippen um die Achse 10 kann automatisch dann erreicht werden, wenn die Aufhängung der Raupe 1 die Form einer Kugelkallotte hat, so wie es schematisch in Fig. 5 angedeutet ist. Wenn die Krümmung der Kugelkallotte entsprechend dem eingezeichneten Radius R verläuft, wird eine Kippbewegung der Raupe 1 symmetrisch ausgeglichen.

## Patentansprüche

1. Vorrichtung zum Ziehen eines langgestreckten Profilkörpers in seiner Längsrichtung, bestehend aus zwei durch einen Zwischenraum zur Aufnahme des Profilkörpers voneinander getrennten endlosen Raupen (1,2), die über Umlenkräder (3,4,5,6) geführt sind und von denen zur Veränderung des Abstandes der beiden Raupen voneinander mindestens eine relativ zur anderen verstellbar ist, dadurch gekennzeichnet, daß mindestens eine der Raupen (1,2) um eine in ihrer Längsrichtung verlaufende Achse (10) kippbar ist.

2. Vorrichtung nach Anspruch 1, dadurch gekennzeichnet, daß die Achse (10) mittig zur kippbaren Raupe (1,2) angeordnet ist.

3. Vorrichtung nach Anspruch 1 oder 2, dadurch gekennzeichnet, daß zur Verstellung der Raupe (1,2) ein Handrad vorgesehen ist.

4. Vorrichtung nach Anspruch 1 oder 2, dadurch gekennzeichnet, daß zur Verstellung der Raupe (1,2) ein Elektromotor (12) vorgesehen ist.

5. Vorrichtung nach Anspruch 1 oder 2, dadurch gekennzeichnet, daß zur automatischen Verstellung der Raupe (1,2) ein Federmechanismus (F) vorgesehen ist.

6. Vorrichtung nach einem der Ansprüche 1 bis 5, dadurch gekennzeichnet, daß die kippbare Raupe (1,2) zusammen mit der Achse (10) quer zu ihrer Bewegungsrichtung verschiebbar ist.

## Claims

1. Device for drawing an elongated profile element in its longitudinal direction, comprising two continuous caterpillars (1, 2) which are separated from one another by a gap for receiving the profile element, which are guided over deflection wheels (3, 4, 5, 6) and of which at least one is adjustable relative to the other in order to vary the distance between the two caterpillars, characterized in that at least one of the caterpillars (1, 2) is tiltable about an axle (10) extending in its longitudinal direction.

2. Device according to claim 2, characterized in that the axle (10) is disposed centrally in relation to the tiltable caterpillar (1, 2).

3. Device according to claim 1 or 2, characterized in that a handwheel is provided for adjusting the caterpillar (1, 2).

4. Device according to claim 1 or 2, characterized in that an electric motor (12) is provided for adjusting the caterpillar (1, 2).

5. Device according to claim 1 or 2, characterized in that a spring mechanism (F) is provided for automatic adjustment of the caterpillar (1, 2).

6. Device according to one of claims 1 to 5, characterized in that the tiltable caterpillar (1, 2) together with the axle (10) is displaceable at right angles to its direction of movement.

## Revendications

1. Dispositif pour l'étirage d'un corps profilé allongé dans le sens de sa longueur se composant de deux chenilles (1, 2) sans fin séparées l'une de l'autre par un espace intermédiaire destiné a recevoir le corps profilé, chenilles qui sont guidées par des poulies de renvoi (3, 4, 5, 6) et dont au moins une est réglable par rapport aux autres pour la modification de l'écart entre les deux chenilles, caractérisé en ce qu'au moins l'une des chenilles (1, 2) peut basculer autour d'un axe (10) s'étendant dans le sens de sa longueur.

2. Dispositif selon la revendication 1, caractérisé en ce que l'axe (10) est disposé au milieu par rapport à la chenille basculante (1, 2).

3. Dispositif selon la revendication 1 ou 2, caractérisé en ce qu'un volant manuel est prévu pour le réglage de la chenille (1, 2).

4. Dispositif selon la revendication 1 ou 2, caractérisé en ce qu'un moteur électrique (12) est prévu pour le réglage de la chenille (1, 2).

5. Dispositif selon la revendication 1 ou 2, caractérisé en ce qu'un mécanisme à ressort (F) est prévu pour le réglage automatique de la chenille (1, 2).

6. Dispositif selon l'une des revendications 1 a 5, caractérisé en ce que la chenille basculante (1, 2) peut être décalée avec son axe (10) transversalement à son sens de déplacement.
